# EUROPEAN PATENT APPLICATION

(11) **EP 4 397 633 A1**
(43) Date of publication of application: **10.07.2024**
(21) Application number: 23179869.5
(22) Date of filing: 16.06.2023

(54) **CRUCIBLE FOR A 3D PRINTER, 3D PRINTER AND METHOD OF PRINTING LOW-TEMPERATURE GLASS**

(30) Priority: 03.01.2023 EP 23461501
(71) Applicant: Sygnis S.A., 80-309 Gdansk (PL)
(72) Inventor: WIENCLAW, Pawel, 01-771 Warszawa (PL); BURGS, Andrzej, 01-493 Warszawa (PL)
(74) Representative: AOMB Polska Sp. z.o.o.

(57) **Abstract**

The subject of the invention is a Crucible for 3D printing of of hot-melt material, comprising a loading container open at the top, a nozzle connected from above to the lower part of the crucible and extending downwards, which nozzle ends with a nozzle tip, on the loading container there is a cover which has a hole and a pipe configured to supply gas to control the flow of the hot-melt material from the crucible through the nozzle.

The invention also includes 3D printers with a crucible, a printing chamber and a printing bed.

The invention also includes a method of printing optical fiber preforms from at least one hot-melt material.

## Description

### Technical field

Described invention is related to the field of 3D printing and hot melt printing technology. In more details, the subject of the invention is a 3D printer crucible, a 3D printer and a low-temperature glass printing method that allows printing with various hot melt materials, in particular for printing fiber optic preforms.

### Technical background

Nowadays, 3D printers are known to print at a temperature not exceeding 350 °C. Thermoplastic polymer fibers (such as ABS or PLA) that are used in conventional fused deposition modelling (FDM) 3D printers require a much lower operating temperature during their deposition. They are also much smaller in terms of cross-sectional area. The combination of a lower operating temperature and lower thermal mass allows the FDM filaments to cool down in a much shorter time and thus provides greater flexibility to print any geometry without damage.

In contrast, in molten glass extrusion, given the higher operating temperature and larger fiber diameter, cooling rates are typically much slower and the time the fiber remains tacky and vulnerable is longer. When printing on molten glass, due to the relatively large size of the fiber and its thermal inertia, it takes a long time for the fiber to cool (within a few minutes). During this cooling period, any external forces on the fiber can cause a delayed response due to the high viscosity of the molten glass or internal shear forces in the molten glass.

US20170291841A1 describes a method and system for 3D printing of objects using molten glass. The method includes extruding the molten glass material onto the printer bed in the deposition direction. The nozzle remains stationary throughout the process while the table is translated and rotated. Deposition direction remains constant relative to the nozzle and fixed position. Additional steps include heating the nozzle with a gas burner, cutting the extruded filament with computer-controlled shears, and cooling the nozzle with compressed air. The system includes a work table, a furnace for heating the glass material, a stationary nozzle and control motors.

US20150307385A1 describes a device for 3D printing objects using molten glass that is very similar to US20170291841A1, the main difference being that the nozzle remains stationary during the printing process. In both presented solutions, the crucible of the 3D printer is a side issue, and the construction of the crucible is not described in detail. The crucible is a simple open top ceramic container, heating is provided by external heating elements. The solution suffers from problems due to the inertia and uneven heating of the printed material. In addition, the crucible is in direct contact with the printed material and is not mechanically separated from it in any way, causing potential problems with the reuse of the crucible using different materials. In addition, the previously known printers printed from one batch - one crucible and one nozzle, and thus did not allow combining (printing) from two different elements - insert blocks, while at the same time being able to stop and continue /process - 3D printing/ at any later time.

### Summary

The subject of the invention is a crucible for a 3D printer for applying layers of a liquid hot-melt material, which crucible comprises a loading container open at the top, a nozzle connected from above to the lower part of the crucible and extending downwards, which nozzle ends with a nozzle tip, on the loading container there is a cover which has an opening and a pipe configured to supply gas to control the flow of the hot melt material from the crucible through the nozzle. Characterized in that the cover covering the loading container has a gasket configured to pneumatically seal the charging chamber, the gasket being made of a heat resistant material and adapted to be sealed at a pressure of a minimum of 2 bar, preferably a minimum of 50 bar, the crucible further comprising a replaceable crucible insert configured to contain on the inner wall of the crucible and preventing contact between the crucible wall and the hot melt material, additionally, the crucible contains a heater placed on the loading container from the outside, where the heater is divided into at least two sections, each section is powered and/or controlled separately, and the temperature in each section is kept to an accuracy of +/- 5°C.

Preferably, the hot-melting material is glass, glaze, metal alloys, eutectic alloys, ceramics, sinters, which at a temperature above 300°C obtain thermoplasticity for control gas pressures of a minimum of 2 bar - preferably these are sodium glass, lead glass, tellurium glass, fluoride glass, germanium glass, phosphate glass or borosilicate glass.

Preferably, the temperature in each section is kept with an accuracy of less than +/- 1°C.

Preferably, the gas controlling the flow of the hot melt material through the nozzle is an inert gas, preferably nitrogen or argon.

3D printer for printing with a hot melt material, comprising at least one crucible according to any one of claims 1 to 4, a print chamber, a printing bed, which crucible and/or printing bed is mounted on holders, which holders extend through the walls of the print chamber and connect the crucible and/or a printing bed with a mechanical kinematic system for moving them relative to each other and/or to the print chamber, the print table includes at least one printing bed heater, and the print chamber is thermally insulated with an insulating material with a thermal conductivity coefficient λ of at least 0.05 W/(m·K) preferably 0.1 W/(m K) and at least one chamber heater configured to maintain a temperature in the printing chamber of at least 300°C.

The invention also includes a hot melt 3D printer comprising a print chamber, at least one crucible according to any one of claims 1 to 4 extending through the print chamber such that the lower portion of the crucible is inside the print chamber and the upper portion of the crucible is outside the print chamber, the printing bed mounted on holders, which holders pass through the walls of the print chamber and connect the printing bed with a mechanical kinematic system for moving them relative to each other and/or relative to the print chamber, the printing bed includes at least one printing bed heater, and the print chamber is thermally insulated an insulating material with a thermal conductivity coefficient λ of at least 0.05 W/(m K), preferably 0.1 W/(m K), and at least one chamber heater configured to maintain a print chamber temperature of at least 300 °C.

Preferably, the crucible and/or print bed can move in a horizontal or vertical direction or sideways or any combination of these directions.

Preferably, the crucible and/or the print stage can rotate in a vertical, horizontal or transverse axis or any combination of these axes.

Preferably, at least one holder passing through the walls of the printing chamber additionally includes a thermal gasket of the holders insulating the interior of the printing chamber from the external environment.

Preferably, the heat seal of the holders is of the bellows or telescopic type or a combination of these types.

Preferably, it comprises two or more crucibles, which crucibles contain the same type of hot melt material or a different type of hot melt material and are jointly or separately controlled.

The invention also includes a method of printing optical fiber preforms from at least one hot melt material characterized as, that it comprises:
Preparation of the 2D design of the cross-section of the fiber optic preform;
Converting a 2D section into a 3D element;
Dividing the 3D element into a series of mostly spatial segments, each of which corresponds to the expected shape of the extruded material from the crucible in a single straight line pass.
Calculation of the 3D solid created in point c. into a set of instructions for moving the printing bed relative to the crucible and controlling the outflow of the hot-melt material by controlling the temperature of the crucible and the pressure of the control gas, for which instructions of applying the layers of hot-melt material involve the movement of the crucible relative to the printing bed while the hot melt material is forced out of the crucible to form one segment;
Heating the printing chamber to at least 300°C, the crucible to at least 300°C and the printing bed to at least 300°C;
Completion of a set of instructions and application of a hot-melt material in the form of a set of segments reproducing the shape of a 3D element;
Reducing the pressure in the crucible to atmospheric pressure after printing is complete;
Removing crucible inserts from the crucible;
Carrying out the process of thermal relaxation of the 3D printed element.

Preferably, the printing bed is cooled at a rate of 100 °C/min to 0.1 °C/min, preferably 5 °C/min, and the printing chamber is cooled at a rate of 100 °C/min to 0.1 °C/min, preferably 5 °C/min and /or the crucible is cooled at a rate of 100 °C/min to 0.1 °C/min, preferably 5 °C/min.

Preferably, it includes additional instructions for using additional crucibles containing the same or different hotmelts to print individual segments of different hotmelts.

### Figures with descriptions

The invention will be described in more detail in a preferred use-case with reference to the attached figures, in which:

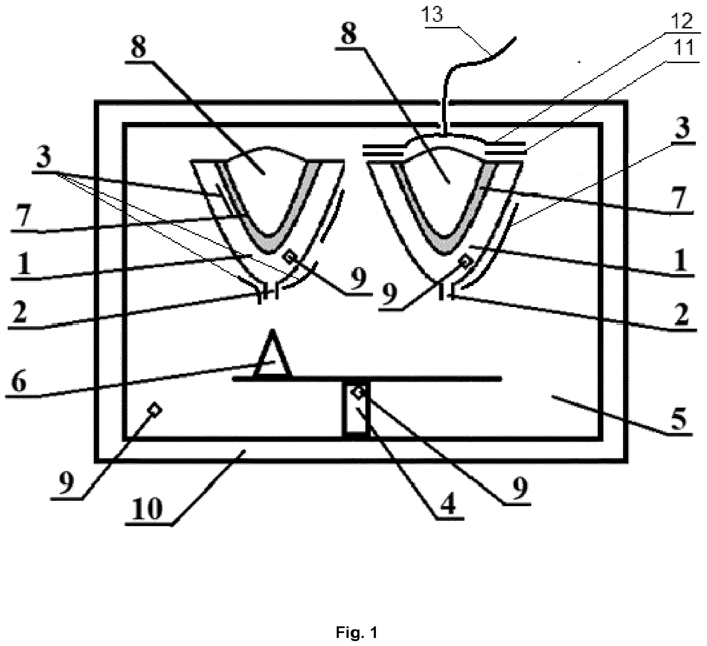

Fig.1 shows the 3D printer in side view

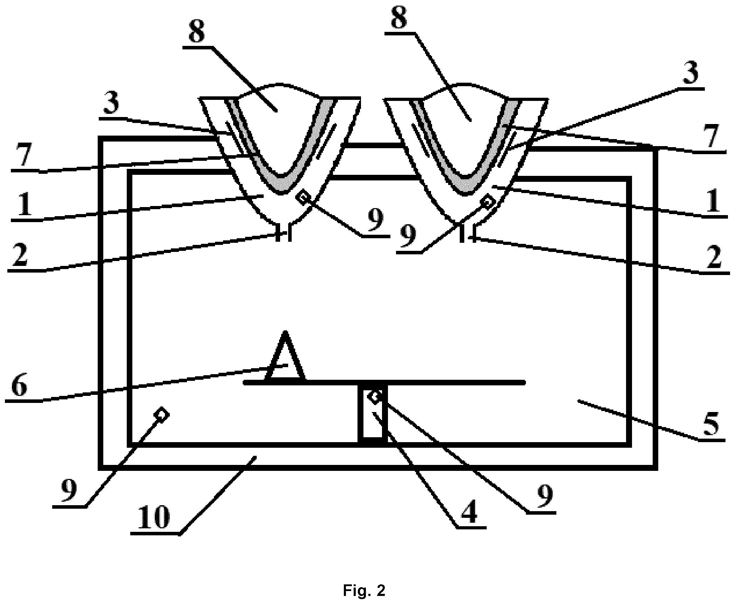

Fig. 2 shows the side view of the 3D printer in the version with the upper part of the crucible outside the printing chamber and high-temperature insulation;
Fig.3 shows an example of the temperature profile of the 3D printer's operation;
Fig.4 shows the vortex structure of the obtained 3D print;
Fig.5 shows the PCF structure of the obtained 3D print;
Fig.6 shows the gyroid structure of the obtained 3D print.

### Detailed description of preferable embodiments of the invention

According to the invention, a crucible for a 3D printer, a 3D printer and a method of printing with low-temperature glass allow for printing with hot-melt materials, in particular for printing fiber optic preforms.

The aim of the invention is to develop a new crucible, a 3D printer and a new method of direct 3D printing that would allow:
- printing at higher temperatures up to 1000 °C in the printing chamber,
- printing simultaneously or alternately with two or more materials;
- combining two elements simultaneously from two and more different materials, obtaining the assumed spatial structures (using temperature profiles for fusible materials);
- real-time control of the temperature distribution of the print chamber and the temperature of elements during printing, with simultaneous monitoring of print parameters and their recording in real-time, coupled with the image from the camera placed in the print chamber or outside the print chamber.

The solution according to the invention is applicable in particular for:
- low-temperature (e.g. soft glass) 3D glass printing, including printing from two fusible materials simultaneously,
- automated production of preforms for the production of nanostructured optical fibers and lenses,
- 3D printing directly from glass (e.g. commercially available soft glasses or proprietary mixes of soft glasses), on-demand without the need for post-processing or multi-stage printouts (precise temperature control of the glass, printing bed and chamber; and printing from one or two print heads and two types of glass in one process),
- obtaining advanced single, double or multi-component optical elements,
- manufacturing of eutectic or crystalline spatial structures
- manufacturing of glass/eutectic/ceramic/crystalline coatings on flat or spatial surfaces.

According to a first use case, the 3D printer crucible 1 is configured to deposit layers of liquid hot melt material. The crucible 1 comprises a loading container open at the top, a nozzle 2 connected at the top to the lower part of the crucible 1 and extending downwards, which nozzle terminates with a nozzle tip. The loading container cover includes an opening, preferably a pipe, for supplying gas controlling the outflow of the thermoplastic material from the crucible through the nozzle. Pressurized gas is fed into the sealed crucible 1 through an opening in the cover, the gas pressure increases and the plasticized material is forced out through the nozzle at the bottom of the crucible through the nozzle. Preferably, the gas is an inert gas, for example nitrogen, argon or another gas which does not react with the hot melt material at the operating temperature of the crucible. The nozzles are interchangeable nozzles of different diameters and shapes, with the nozzles specially adapted to the prevailing high temperatures. The temperature at the end of the nozzle is greater than or equal to the temperature of the other sections and is a minimum of 300 °C. The crucible 1 additionally comprises a cover 12 covering the loading container from above and a gasket 11 configured to pneumatically seal the charging chamber. The gasket is made of a heat-resistant material and is adapted to maintain tightness for a gas pressure in the charging chamber of preferably 50 bar. The gasket 11 is configured to maintain a seal for pressures above atmospheric pressure (100 bar and above) and for pressures less than atmospheric pressure (low vacuum). Preferably, the gasket 11 is made of a soft metal (aluminum, copper, bronze), heat-resistant plastic and/or mineral material. Capable of maintaining the above-mentioned pressures at high temperatures.

The crucible 1 contains crucible insert 7 into which hot-melt material 8 is inserted (hot-melt material blocks or cylinders (preferably) or cuboids/larger pieces of glass (hot-melting material), without trapped air, it is a much more advantageous form than glass powder, because the blocks are free of bubbles/gas or impurities Preferably the glass is melted in a separate machine to form hot-melt material blocks) so as to eliminate additional cleaning of crucible 1 (or replacement of the crucible with a new one) after hot-melt material. By using the crucible inserts 7 there is no need to replace the crucible 1 when changing the material. The crucible insert 7 follows the shape of the interior of the crucible 1 and is adapted to it. The crucible inserts are made of a material that will not react with the hot-melt material (e.g. a ceramic insert is provided for glass).

In addition, crucible 1 contains a heater placed on the charging chamber from the outside, where the heater is divided into at least two sections, each section is powered and/or controlled separately, and the temperature in each section is maintained by an external controller with an accuracy of less than +/- 5 °C and preferably +/- 1 °C.

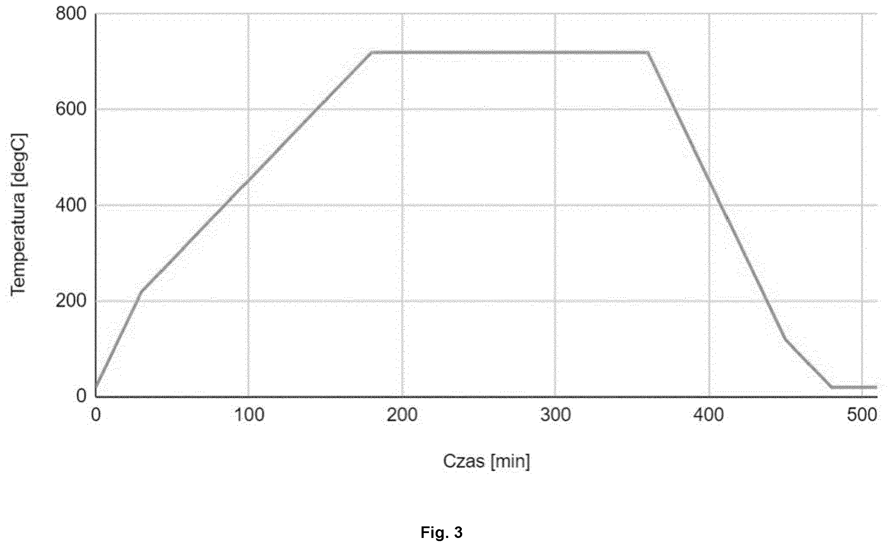

An even temperature distribution is maintained in the printing chamber 5 and controlled with an accuracy of +/- 5 °C as a constant value or according to a preset temperature profile (for example, as in Fig. 3).

As hot-melt material blocks, a 3D printer using a crucible is adapted to use a number of hot-melt materials, which are obtained at high temperatures above 300 °C, such as glass, glazes, metal alloys, eutectic alloys, ceramics, sinters.

However, the main material used in the printer is various types of glass such as sodium, lead, tellurium, fluoride, germanium, phosphate or borosilicate glass.

According to a preferred use case, the invention comprises a hot melt 3D printer comprising at least one crucible 1 as described above and a printing bed. The crucible 1 and/or the printing bed 4 is mounted on holders which pass through the walls of the printing chamber 5 and connect the crucible 1 and/or the printout table with the mechanical kinematic system (drive) that moves them (the crucible 1 and/or the printing bed 4) relative to each other and/or relative to the printing chamber. The holders passing through the walls of the printing chamber 4 preferably include a thermal gasket of the holders, thermally insulating the interior of the printing chamber 4 from the external environment. The seal is preferably bellows type, telescopic type or a combination of these types. The gasket includes elements made of polymers, metals and/or mineral or ceramic materials.

According to a preferred use case, the upper part of the crucible 1 (or crucibles 1) is located outside the printing chamber 4 beyond its high temperature insulation 10, which makes it possible to add a new charge block 8 (feed material) at a given moment during printing, when the pressure of the gases controlling the outflow of hot melt material from crucible 1 is equalized to ambient pressure and the cover can be removed safely.

In a preferred use case, the crucible 1 and/or the print bed 4 can move and/or rotate relative to each other and to the print chamber 5 in three axes (two horizontal X, Y, and one vertical Z) or any combination of these axes using a kinematic system led outside the printing chamber 5.

3D printer according to the preferred use case has multiple crucibles 1 (two, three, four, five as needed), part of the crucibles 1 contains the same type of hot-melt material but has nozzles 2 of different diameters and/or shapes, part of the crucibles 1 contains a different type hot melt material.

The 3D printer, according to the preferred use case, may include a temperature sensor 9, preferably in the form of a thermocouple, placed in: the printing chamber 4, on the heaters 3, on the crucible 1, in the print table 5 and in the nozzle 2.

Particularly advantageous is the temperature sensor 9 located in the nozzle as close as possible to the nozzle hole. This makes it easier to control the flow of the hot-melt material through the nozzle. In a preferred use case, the printer nozzle has a diameter of less than 1 mm and the distance of the temperature sensor 9 from the nozzle opening is less than 10 mm and preferably less than 4 mm.

In the use case, the printing bed 4 further includes at least one printing bed heater 4, and the print chamber 5 includes at least one print chamber heater configured to maintain a temperature in the print chamber of at least 300°C.

In a preferred use case, printing bed 4 has more than one heater which is used to create a temperature gradient across printing bed 4 or to compensate for uneven heat transfer across the printing bed and achieve an even temperature distribution across print bed 4 surface.

In the preferred use case, the printing chamber 5 has more than one heater which is used to create a temperature gradient in the printing chamber 5 or to compensate for uneven heat transfer and chamber thermal bridges and achieve an even temperature distribution in the volume of the printing chamber 5.

The printing chamber 5 is thermally insulated by placing a high-temperature insulation 10 made of an insulating material with a thermal conductivity coefficient λ of at most 0.1/W(m. K), preferably 0.05 W/(m·K).

According to a preferred example, the 3D printer includes a computer control system for automatically guiding and monitoring the 3D print during printing.

In the use case, 3D printing, especially for fiber optic preforms with a designed spatial arrangement, in which there are layers with different optical and rheological properties, free spaces or spatially differentiated three-dimensional meshes, 3D printing parameters are constantly monitored and saved along with the image from the printing chamber 5. The image is recorded by a camera with additional illumination located in the printing chamber 5. In another preferred use case, the image is recorded by a camera with additional illumination located outside the printing chamber 5.

In a preferred use case, the computer system bi-directionally, wired and/or wirelessly communicates with the 3D printer controller. This allows controlling the printing process using closed feedback loops of signals from various sensors and using methods of correlation of these values.

The invention also includes a method for printing fiber optic preforms from at least one material using a 3D printer. In a preferred use case, the method of printing fiber preforms comprises the following steps:
a) Preparation of the 2D design of the cross-section of the fiber optic preform;
b) Converting a 2D section into a 3D spatial element. Assuming that the preform model is elongated 2D cross-section of the preform profile into 3D space.
c) Dividing the 3D spatial element into a series of mostly spatial segments, each of which corresponds to the expected shape of the material extruded from the crucible in a single straight line (or other curved line, broken, continuous or discontinuous).
d) Calculation of the 3D solid created in point c) into a set of instructions for moving the printing bed 4 relative to the crucible 1 and controlling the outflow of the hot-melt material by controlling the temperature of the crucible 1 (preferably the temperature gradient) and the pressure and / or flow of the control gas, from which instructions for applying the layers of hot melt material involve the movement of the crucible 1 relative to the printing stage 4 as the hot melt material is forced out of the crucible to form one segment. In the case when the hot-melt material is to flow out of the crucible 1, the gas pressure in the crucible 1 is increased, when the material is to stop flowing, the gas pressure is equalized with the ambient pressure.
e) Heating the printing chamber 5 to at least 300 °C, the crucible 1 to at least 300 °C and the printing table 4 to at least 300 °C. The temperatures of individual elements may vary and their value depends on the required temperature needed to decrease viscosity of the hot-melt material in the crucible 1.
f) Completion of sets of instructions and application of hot-melt material in the form of a set of segments reproducing the shape of a 3D element. The set of instructions includes, among others, the coordinates of the position of the printer's elements relative to each other, gas pressure values in crucible 1, voltage and current values of the heaters and times of their activation, printing speed.
-g) Lowering the pressure in the crucible to atmospheric pressure after the printout is completed.
-h) Removal of crucible inserts from the crucible
i) Carrying out the thermal relaxation process according to a given profile. The printout should be properly annealed by cooling it (and/or heating) according to the temperature and time profile appropriate for a given hot melt material.

After the printing process is completed, the printing bed 4, the printing chamber 5 and the crucible 1 are cooled at a rate preferably not faster than 0.5 °C/min, preferably the cooling is carried out non-linearly along the given profile, an example cooling profile is shown in Fig. 3). Cooling profiles depend on the type of printed material (catalogue data) and the printed shape (determined empirically).

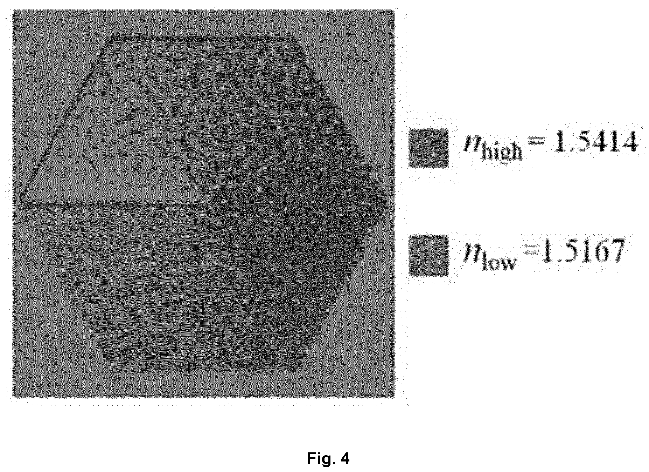

According to a preferred use case, preform printing for the production of nanostructured optical fibers and lenses, two different CD16 lead glasses are used as input blocks. Finally, a 3D print 6 with a vortex structure is obtained (as shown in Fig. 4).

Hot-melt materials in the form of blocks are used, which are extruded under pressure from the crucible to the nozzle: low-temperature glasses. The nozzles are interchangeable nozzles of different diameters and shapes. The 3D printer enables non-planar 3D printing, i.e. it can print simultaneously in all 3 axes.

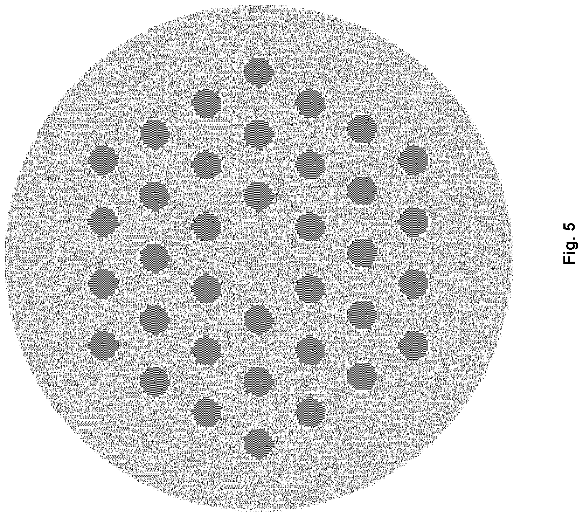

According to a preferred use case, in the method of printing preforms for the production of nanostructured optical fibers and lenses, two different glasses are used as input hot-melt material blocks: borosilicate and UV710. Finally, a 3D print with a PCF structure is obtained (as shown in Fig. 5). In the PCF structure developed using the method according to the invention, the holes are not filled with air and are composed of a second glass material. The temperature of the crucibles is 750 °C for UV710 glass and 1150 °C for borosilicate glass.

According to the preferred use case of the printing chamber 5, the temperature inside the printing chamber 5 is maintained at 550°C, while maintaining the temperature of the print bed 4, 550°C, during the 3D printing. The printing parameters are controlled in real-time and in feedback with the temperature of the glass - hot-melt material blocks melted in crucibles 1, which are controlled with an accuracy of +/-1°C in crucibles 1 and on nozzles 2 through sensors in the form of mounted thermocouples by controlling the mounted heaters. At the same time, an even and controlled temperature distribution in the printing chamber and on the print table is maintained.

The temperature profile of the crucible 1, nozzle 2, printing bed 4 and/or print chamber 5 does not have to be linear in time, and every time it is matched to the hot-melt material and the expected result - the 3D print structure.

It is preferable to heat up at a given rate of about 5 °C /min and cool down at a given rate of about 0.5 °C /min or maintain a constant temperature for hours, but it is also possible to heat up faster and then cool down more slowly and maintain any preset temperature profile (within the capabilities of the heaters and the 3D printer's heat control system).

The heating and cooling of individual elements of the printer can be carried out in a constant and variable manner, or according to a requested temperature profile.

According to a preferred use case of the preforms, PBG lead glass is used as input blocks for the production of nanostructured optical fibers and lenses.

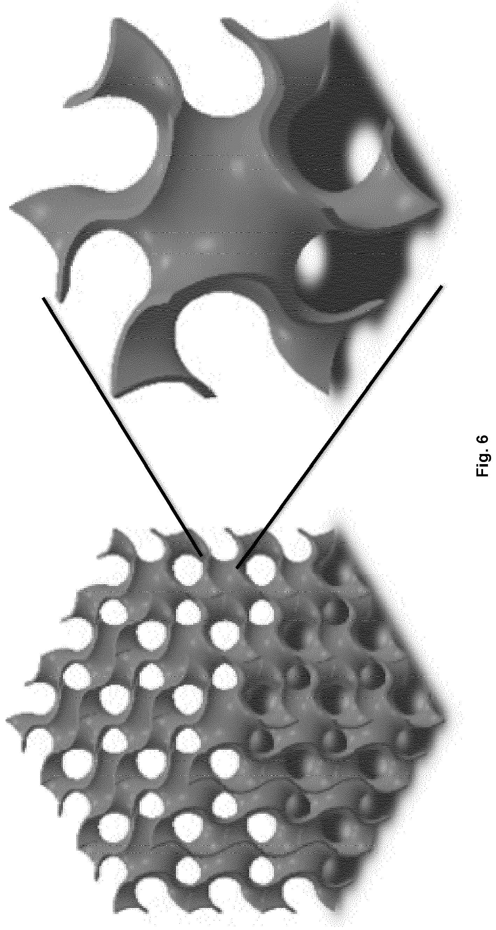

According to a preferred use case, the method according to the invention allows the production of glass 3D prints with a complex structure, e.g. gyroid (as shown in Fig. 6).

### Numerical designations:

1. crucible
2. nozzle
3. heater
4. printing bed
5. printing chamber
6. 3D printed element
7. crucible insert
8. hot-melt material
9. temperature sensor
10. thermal insulation
11. gasket
12. cover
13. pipe

## Claims

1. A crucible (1) for a 3D printer for deposition of a hot-melt material (8), which includes a loading container open at the top, a nozzle (2), connected at its top to the lower part of the crucible and extending downwards, which nozzle (2) ends with a nozzle tip, on the loading container there is a cover which has an hole and a pipe (13) configured to supply gas controlling the outflow of the hot-melt material (8) from the crucible (1) through the nozzle (2) **characterised in that**, that the cover (12) covering the loading container has a gasket configured for pneumatic sealing of the loading container, the gasket (11) is made of a heat-resistant material and adapted to remain sealed at an increased pressure of preferably 50 bar and more, the crucible (1) also includes a replaceable crucible insert (7), configured to placing on the inner wall of the crucible (1) and preventing contact between the crucible wall, and the hot-melt material (8), additionally the crucible (1) contains a heater placed on the charging chamber from the outside, where the heater is divided into at least two sections, each section is powered and/or controlled separately, and the temperature in each section is kept with an accuracy of +/- 5°C.

2. A crucible according to claim 1, **characterised in that**, that the hot-melt material (8) is glass, glaze, metal alloys, eutectic alloys, ceramics, sinters, which obtain thermoplasticity at a temperature above 300°C for control gas pressures of at least 2 bar - preferably it is sodium glass, lead glass, tellurium, fluoride, germanium, phosphate or borosilicate.

3. A crucible according to claims 1 or 2, **characterised in that**, that the temperature in each section is kept with an accuracy of +/- 1°C.

4. A crucible according to claims 1 or 2, **characterised in that**, that the gas controlling the flow of the hot-melt material (8) through the nozzle (2) is an inert gas, preferably nitrogen or argon.

5. A 3D printer printing with hot-melt materials (8) comprising at least one crucible (1) according to any one of claims 1 to 4, a printing chamber (5), a printing bed (4), which crucible (1) and/or a printing bed (4) is mounted on holders, which holders pass through the walls of the printing chamber (5) and connect the crucible (1) and/or the printing bed (4) with a mechanical kinematic system for moving them relative to each other and/or relative to the printing chamber (5), the printing bed (4) includes at least one printing bed heater, and the printing chamber (5) is thermally insulated with an insulating material with a thermal conductivity coefficient λ of at least 0,05 W/(m·K) preferably 0,1 W/(m·K) and at least one chamber heater configured to maintain a temperature in the printing chamber (5) of at least 300°C.

6. A 3D printer printing with hot-melt materials (8) comprising a printing chamber (5), at least one crucible (1) according to any one of claims 1 to 4 extending through the printing chamber (5) such that the lower part of the crucible is inside the chamber (5) and the upper part of the crucible (1) is outside the printing chamber (5), the printing bed (4) is mounted on holders, which pass through the walls of the printing chamber (5) and connect the printing bed (4) with the mechanical kinematic system to move them relative to each other and/or relative to the printing chamber (5), the printing bed (4) includes at least one printing bed heater, and the printing chamber (5) is thermally insulated with an insulating material with a thermal conductivity coefficient λ of at least 0,1 W/(m·K) preferably 0,05 W/(m·K) and at least one chamber heater configured to maintain a temperature in the printing chamber (5) of at least 300°C.

7. A 3D printer according to claim 5, **characterised in that**, that the crucible (1) and/or the printing bed (4) can move in the horizontal (X) or vertical (Z) or sideways (Y) direction or in any combination of these directions.

8. A 3D printer according to claim 5, 6 or 7, **characterised in that**, that the crucible (1) and/or the printing table (4) can rotate in a vertical or horizontal or transverse axis or in any combination of these axes.

9. A 3D printer according to any one of claim from 5 to 8, **characterised in that**, that at least one holder passing through the walls of the printing chamber (5) additionally comprises a heat seal of the holders insulating the inside of the printing chamber (5) from the external environment.

10. A 3D printer according to any one of claim 5 through 9, **characterised in that**, that the heat seal on the holders is of the bellows or telescopic type, or a combination of these types.

11. A 3D printer according to any one of claim from 5 to 10, **characterised in that**, that it comprises two or more crucibles (1), which crucibles (1) contain the same type of hot-melt material (8) or a different type of hot melt material (8) and are mutually or separately controlled.

12. A method of printing optical fiber preforms from at least one hot-melt material (8) by means of a printer according to any one of claims from 5 to 12, **characterised in that**, that it comprises:
a. Preparation of a 2D design of the cross-section of the fiber optic preform;
b. Converting a 2D section into a 3D element;
c. Dividing the 3D element into a series of mostly spatial segments, each of which corresponds to the expected shape of the extruded material from the crucible (1) in a single straight line pass.
d. Calculation of the 3D solid created in point c. into a set of instructions for moving the printing bed (4) relative to the crucible (1) and controlling the outflow of the hot-melt material (8) by controlling the temperature of the crucible (1) and the pressure of the control gas, for which instructions of applying the layers of hot-melt material (8) involve the movement of the crucible (1) relative to the printing bed (4) while the hot melt material is forced out of the crucible (1) to form one segment;
e. Heating the printing chamber (5) to at least 300°C, the crucible (1) to at least 300°C and the printing bed (4) to at least 300°C;
f. Completion of a set of instructions and application of a hot-melt material in the form of a set of segments reproducing the shape of a 3D element;
g. Reducing the pressure in the crucible (1) to atmospheric pressure after printing is complete;
h. Removing crucible inserts (7) from the crucible (1);
i. Carrying out the process of thermal relaxation of the 3D printed element (6).

13. The method of printing optical fiber preforms according to claim 12, **characterised in that**, that the printing bed (4) is cooled at a rate from 100°C/min to 0,1°C/min, preferably 5°C/min, and the printing chamber (5) is cooled at a rate of 100°C/min to 0,1°C/min, preferably 5°C/min, and/or cooling the crucible (1) at a rate of 200°C/min to 0.1°C/min, preferably 0.5°C/min.

14. The method of printing optical fiber preforms according to claim 12 or 13, **characterised in that**, that it includes additional instructions for using additional crucibles (1) containing the same or different hot melt materials (8) to print distinctive segments of different hot-melt materials (8).
